# EUROPÄISCHE PATENTSCHRIFT

(11) **EP 4 295 681 B1**
(45) Veröffentlichungstag und Bekanntmachung des Hinweises auf die Patenterteilung: **02.09.2026**
(21) Anmeldenummer: 23180322.2
(22) Anmeldetag: 20.06.2023
(51) Int. Cl.: A01M 1/02, A01M 1/00, A01M 1/10

(54) **INSEKTENFALLE**
INSECT TRAP
PIÈGE À INSECTES

(30) Priorität: 21.06.2022 AT 504412022
(43) Veröffentlichungstag der Anmeldung: 27.12.2023
(73) Patentinhaber: WITASEK Pflanzenschutz GmbH, 9560 Feldkirchen (Ktn.) (AT)
(72) Erfinder: WITASEK, Peter, 9560 Feldkirchen (AT); LECHNER, Karl, 9360 Friesach (AT)
(74) Vertreter: Beer & Partner Patentanwälte KG

(56) Entgegenhaltungen:
- EP-A1- 3 466 256
- WO-A1-2016/168347
- WO-A1-2021/173609
- CN-A- 107 182 971
- US-A1- 2013 162 443
- US-A1- 2017 223 943
- US-A1- 2019 281 805

## Beschreibung

Die Erfindung betrifft eine Insektenfalle mit den Merkmalen des einleitenden Teils von Anspruch 1.

Insektenfallen sind in verschiedenen Ausführungsformen bekannt.

Die bekannten Insektenfallen besitzen einen Auffangbehälter (Fangflasche), in dem sich gefangene Insekten sammeln.

Bekannt sind "Schlitzfallen" (AT 16 255 U1 und AT 503 707 B1), Kreuzbarrierenfallen und "Segmenttrichterfallen" (AT 523 489 A1).

Oft stellt sich das Problem, die Menge der gefangenen Insekten, z.B. Borkenkäfer (Buchdrucker), zu erfassen.

Derzeit muss die Insektenfalle in regelmäßigen Abständen kontrolliert, und der Fangbehälter (Fangflasche) - falls "voll" - geleert werden. Das ist eine zeitaufwändige und daher kostenverursachende Tätigkeit.

Es wurde schon vorgeschlagen, Insektenfallen mit Einrichtungen zum Erfassen der Menge der gefangenen Insekten auszurüsten.

WO 2014/037936 A1 und US 2019/327,951 A1 zeigen Insektenfallen, die mit Einrichtungen zum Zählen der gefangenen Insekten ausgestattet sind.

In WO 2014/037936 A1 wird zum Zählen der gefangenen Insekten ein optischer Sensor oder Näherungssensor verwendet, der im Bereich der Eintrittsöffnung des Fangbehälters (Fangflasche) angeordnet ist.

Das Erfassen von Insekten mit Hilfe von optischen Sensoren oder Näherungssensoren, ist - ebenso wie das Erfassen der Zahl der Insekten, die in die Fangflasche gelangen, mit Hilfe von Lichtschranken - eine empfindliche und für den Einsatz im Forstbetrieb nicht immer geeignete Lösung zum Zählen gefangener Insekten.

Mit einer aus CN 110849434 A bekannten Vorrichtung wird die Menge gefangener Insekten über das Volumen ermittelt. Verwendet wird ein Messzylinder, wobei mit Hilfe eines Abstandssensors (IR oder Ultraschall) die Höhe des Hohlraumes in dem Messzylinder ermittelt wird. Die Oberseite der in dem Messzylinder enthaltenen Insekten wird geglättet. Angewendet wird eine Formel, mit der die Zahl der Insekten aus der
- Querschnittsfläche des Messzylinders,
- Höhe der Insekten in dem Messzylinder und einem
- insektenspezifischen Koeffizienten
berechnet wird.

Bei CN 107347859 A wird das Volumen von in einer konischen Falle gefangenen Insekten berechnet. Die gefangenen Insekten werden mit einer Kamera beobachtet. Eine Auswerteeinheit errechnet aus den von der Kamera gelieferten Daten (Bilder) die Zahl der gefangenen Insekten. Dazu wird die Größe (Radius) des Bildes der Oberfläche der gefangenen Insekten herangezogen. Aus dem Volumen wird unter Anwenden der Masse eines Insekts die Zahl der gefangenen Insekten errechnet.

Aus AT 523 489 A1 ist eine Insektenfalle mit einem Fangbehälter in Form einer Fangflasche bekannt. In den Fangbehälter treten gefangene Insekten durch eine Eintrittsöffnung ein. Im Bereich zwischen der Insektenfalle und dem Fangbehälter ist eine Einrichtung vorgesehen, mit der die Zahl der in den Fangbehälter fallenden, gefangenen Insekten erfasst wird. Dabei umfasst die Einrichtung zum Erfassen der Zahl der Insekten einen Sensor, der für jedes in den Fangbehälter eintretende Insekt einen Impuls abgibt. Dem Sensor ist eine Zähleinrichtung zugeordnet.

Aus EP 4 008 181 A1 ist eine Falle für Insekten bekannt, der eine Vorrichtung zum Ermitteln der Zahl gefangener Insekten zugeordnet ist. Die Vorrichtung zum Ermitteln der Zahl der in der Insektenfalle gefangenen Insekten besitzt ein als Messrohr dienendes Gefäß, in dem sich die gefangenen Insekten ansammeln. Das Gefäß ist in einem Schutzbecher angeordnet, der an dem unteren Ende eines Gehäuses der Vorrichtung angeordnet ist. Die Lage der Oberfläche der Schicht aus Insekten in dem Gefäß wird mit Hilfe eines Abstandssensors einer Sensoreinheit erfasst. Aus der so erfassten Stärke der Schicht aus angesammelten Insekten und der Querschnittsfläche des Gefäßes wird das Volumen errechnet. Aus dem Volumen wird auf die Zahl der Insekten in dem Gefäß geschlossen.

EP 3 466 256 A1 offenbart eine Insektenfalle mit einem Fangbehälter, in dem gefangene Insekten gesammelt werden, und mit einer Einrichtung zum Erfassen der Menge, insbesondere der Zahl der im Fangbehälter gesammelten Insekten. Die Einrichtung umfasst wenigstens zwei Sensoren, von welchen ein Sensor auf einem in den Fangbehälter ragenden Stab angeordnet ist, wobei die Sensoren ansprechen, wenn sich Insekten im Bereich der Sensoren befinden.

Insektenfallen, bei welchen die Zahl gefangener Insekten erfasst werden kann, sind aus WO 2016/168347 A1, CN 107182971 A, US 2017/0223943 A1 und WO 2021/173609 A1 bekannt.

Aus US 2013/0162443 A1 ist eine Anordnung bekannt, mit der Insekten erfasst werden können und die an Insektenfallen angebracht werden kann.

US 2019/0281805 A1 offenbart eine Insektenfalle, deren Eigenschaften entsprechend der zu fangenden Insekten geändert werden sollen.

Der Erfindung liegt die Aufgabe zugrunde, eine Insektenfalle der eingangs genannten Gattung zur Verfügung zu stellen, mit der das Erfassen der Menge gefangener Insekten, insbesondere das Ermitteln der Zahl der gefangenen Insekten, sicher und mit geringem Aufwand möglich ist.

Erfindungsgemäß wird diese Aufgabe mit einer Insektenfalle gelöst, die die Merkmale von Anspruch 1 aufweist.

Bevorzugte und vorteilhafte Ausgestaltungen der Erfindung sind Gegenstand der Unteransprüche.

Da bei der erfindungsgemäßen Insektenfalle die Einrichtung zum Erfassen der in dem Fangbehälter (Fangflasche) enthaltenen, gefangenen Insekten einen mit Sensoren bestückten, in das Fanggefäß ragenden, Messstab aufweist, ist die Menge, insbesondere die Zahl, der gefangenen Insekten genauer als mit den bekannten Einrichtungen erfassbar.

Beispielsweise sind die an dem Messstab vorgesehenen Sensoren insbesondere berührungslos auf die Anwesenheit von Insekten ansprechende Sensoren, wie lichtempfindliche Widerstände (LDR).

Bei der erfindungsgemäßen Insektenfalle wird die Menge, insbesondere die Zahl, der gefangenen Insekten anhand der Bedeckung des Messstabes mit Insekten gemessen. Dabei wird die Menge der gefangenen Insekten über die Anzahl der Sensoren, die von gefangenen Insekten bedeckt sind, also über die Stärke der Schicht gefangener Insekten, ermittelt.

Mit der erfindungsgemäßen Insektenfalle wird die Zahl der gefangenen Insekten auf Grundlage des Volumens gefangener Insekten in dem Fangbehälter ermittelt.

Da mit der erfindungsgemäßen Insektenfalle das Volumen der gefangenen Insekten erfasst und aus dem Volumen die Menge, insbesondere die Zahl, der gefangenen Insekten ermittelt wird, arbeitet die Insektenfalle sicherer und zuverlässiger als die bekannten Einrichtungen mit optischen Sensoren oder Näherungssensoren, welche Insekten nur erfassen, wenn sich diese in den Fangbehälter bewegen.

Beispielsweise kann im Falle des Borkenkäfers (Buchdruckers) - ein Milliliter gefangener Borkenkäfer entspricht etwa 40 Borkenkäfern - bei einem Volumen, das die gefangenen Insekten einnehmen, von 20 Millilitern von etwa 800 gefangenen Borkenkäfern ausgegangen werden.

Da der Flug von Insekten, insbesondere der Käferflug, (stark) von der Temperatur abhängig ist, ist es von Interesse, eine Fangstatistik zu ermitteln, bei der die Temperatur berücksichtigt ist. Damit das mit der erfindungsgemäßen Insektenfalle möglich ist, kann diese mit einem Temperatursensor ausgestattet sein. Insbesondere ist ein solcher Temperatursensor an der Außenseite der Insektenfalle angeordnet.

Die durch das Volumen ermittelte Menge, insbesondere die Zahl, gefangener Insekten kann unmittelbar an der Insektenfalle angezeigt werden. Alternativ ist es möglich, die Zahl der gefangenen Insekten an in Abstand von der Insektenfalle befindliche Geräte zu senden und dort anzuzeigen. In diesem Zusammenhang ist beispielsweise in Betracht gezogen, die erfasste Zahl gefangener Insekten drahtlos auf ein (mobiles) Empfangsgerät, wie ein Tablet oder ein Mobiltelefon, zu übertragen. Dabei ist weiters in Betracht gezogen, auf dem Empfangsgerät (Tablet oder Mobiltelefon) eine App zu installieren, mit der die Menge, insbesondere die Zahl, der gefangenen Insekten angezeigt, gespeichert und daraus eine Fangstatistik, insbesondere ein Fangstatistik in Abhängigkeit von der Temperatur, ermittelt wird.

Für das Erfassen des Volumens gefangener Insekten gibt es verschiedene Möglichkeiten. Im Rahmen der Erfindung ist bevorzugt, dass das Volumen auf Grundlage der Abmessungen einer Schicht aus in dem Fangbehälter angesammelten Insekten bestimmt wird. Dabei kann so vorgegangen werden, dass das Volumen der in dem Fangbehälter angesammelten Insekten berechnet wird, indem die Querschnittsfläche des Raumes mit der Höhe (Stärke) der Schicht (diese entspricht allen auf die Anwesenheit von Insekten ansprechenden Sensoren) aus in dem Fangbehälter angesammelten Insekten multipliziert wird.

Bei der Erfindung wird die Höhe der in dem Fangbehälter gebildeten Schicht aus gefangenen Insekten dadurch ermittelt, dass Sensoren, die sich in der Schicht aus gefangenen Insekten befinden, auf die Anwesenheit von Insekten angesprochen haben und beispielsweise ein entsprechendes Signal abgeben, wogegen oberhalb der Schicht aus gefangenen Insekten liegende Sensoren nicht auf Insekten angesprochen haben und insbesondere kein Signal abgegeben haben.

Die Art und Weise, wie bei der erfindungsgemäßen Insektenfalle die Menge/Zahl gefangener Insekten erfasst wird, kann sowohl bei Insektenfallen, die nach dem Trockenfangverfahren (der Fangbehälter enthält keine Flüssigkeit) arbeiten, als auch bei Insektenfallen, die nach dem Nassfangverfahren (der Fangbehälter enthält eine Fangflüssigkeit) arbeiten, angewendet werden. Somit ist die Erfindung auch bei Insektenfallen, die nach dem Nassfangverfahren arbeiten, von Vorteil. Beim Nassfangverfahren bildet sich eine auf der Fangflüssigkeit schwimmende Schicht (Teppich) aus gefangenen Insekten (Käfern). Die Insekten sinken erst später in die Fangflüssigkeit, gehen also erst später in der Fangflüssigkeit unter. Unterhalb der Schicht aus auf der Fangflüssigkeit schwimmenden Insekten kann sich eine Schicht aus in der Fangflüssigkeit untergegangenen Insekten bilden. Mit Hilfe der bei der erfindungsgemäßen Insektenfalle vorgesehenen Sensoren kann auch die Stärke (Dicke) einer auf einer Fangflüssigkeit schwimmenden Schicht aus gefangenen Insekten ebenso erfasst werden, wie eine allenfalls vorhandene Schicht aus in der Fangflüssigkeit untergegangenen Insekten. Die Stärke (Dicke) einer Schicht aus auf der Fangflüssigkeit schwimmenden Insekten entspricht dem Abstand zwischen dem obersten Sensor und dem untersten Sensor, die auf die Anwesenheit von Insekten angesprochen haben. Eine im unteren Bereich, beispielsweise auf dem Boden, des Fangbehälters liegende Schicht aus gefangenen Insekten wird so erfasst, wie dies bei Fangbehältern ohne Fangflüssigkeit erläutert worden ist.

Von Vorteil bei der Erfindung ist es, dass beliebige Insektenfallen nachgerüstet werden können. Beispielsweise genügt es, zwischen dem Fangbehälter (Fangflasche), in welchem gefangene Insekten gesammelt werden, und der eigentlichen Insektenfalle eine Einrichtung (insbesondere einen Adapter mit dem Messstab) zum Erfassen von in dem Fangbehälter enthaltenen, gefangenen Insekten anzuordnen.

Die Versorgung der Einrichtung der erfindungsgemäßen Insektenfalle, mit welcher Insekten erfasst werden, mit elektrischem Strom kann über das Stromnetz und/oder einen Stromspeicher (Batterie oder Akkumulator) und/oder über wenigstens ein Fotovoltaik-Element erfolgen. Es ist auch ein Modul für einen Wireless-Powershare eingebaut. Sollte der Akkumulator für die Einlagerung über den Winter aufgeladen werden, kann dies über dieses Modul erfolgen.

Weitere Einzelheiten, Merkmale und Vorteile der erfindungsgemäßen Insektenfalle ergeben sich aus der nachstehenden Beschreibung bevorzugter Ausführungsbeispiele anhand der Zeichnungen. Es zeigt:
- Fig. 1: eine Segmenttrichterfalle mit an ihrem unteren Ende angeordnetem Fangbehälter,
- Fig. 2: eine zwischen der eigentlichen Insektenfalle und dem Fangbehälter vorgesehene Einrichtung ("Adapter") zum Erfassen der in dem Fangbehälter enthaltenen Insekten,
- Fig. 3: einen Teil der Einrichtung aus Fig. 2 in anderer Ansicht,
- Fig. 4: den Teil aus Fig. 3 in anderer Ansicht,
- Fig. 5: eine Insektenfalle in Form einer Kreuzbarrierenfalle mit einer an ihrem unteren Ende angeordneten Einrichtung zum Erfassen der gefangenen Insekten und Fangflasche,
- Fig. 6: eine Einzelheit aus Fig. 5 in vergrößertem Maßstab und
- Fig. 7: das untere Ende der in Fig. 5 und 6 gezeigten Insektenfalle mit abgenommener Fangflasche.

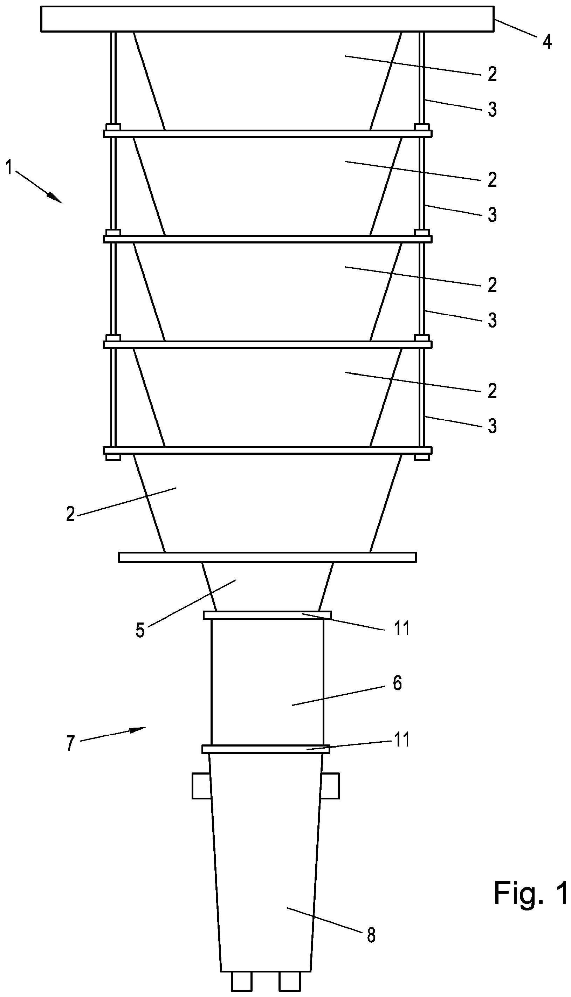

Eine Insektenfalle 1 in Form einer Segmenttrichterfalle von Fig. 1 weist mehrere übereinander angeordnete trichterförmige Körper 2 auf, die miteinander über Verbindungselemente 3, die stab- oder drahtförmig ausgebildet sind, verbunden sind. An der Oberseite des obersten trichterförmigen Körpers 2 ist ein dachförmiger Teil 4 vorgesehen.

Wenn die Segmenttrichterfalle erfindungsgemäß verwendet wird, wird an den unterhalb des untersten trichterförmigen Körpers 2 angeordneten Trichter 5 erfindungsgemäß eine Einrichtung 7 zum Erfassen gefangener Insekten in Form eines Adapters 6 angesetzt und an die Einrichtung 7 unten ein Fangbehälter 8 angebracht. Der Adapter 6 bildet eine Einrichtung 7 zum Erfassen der in dem Fangbehälter 8 enthaltenen (gefangenen) Insekten.

Zum Verbinden des Adapters 6 mit der Insektenfalle 1 und mit dem Fangbehälter 8 sind bajonettverschlussartige Kupplungen 11 oder Schnapp- oder Schraubkupplungen vorgesehen.

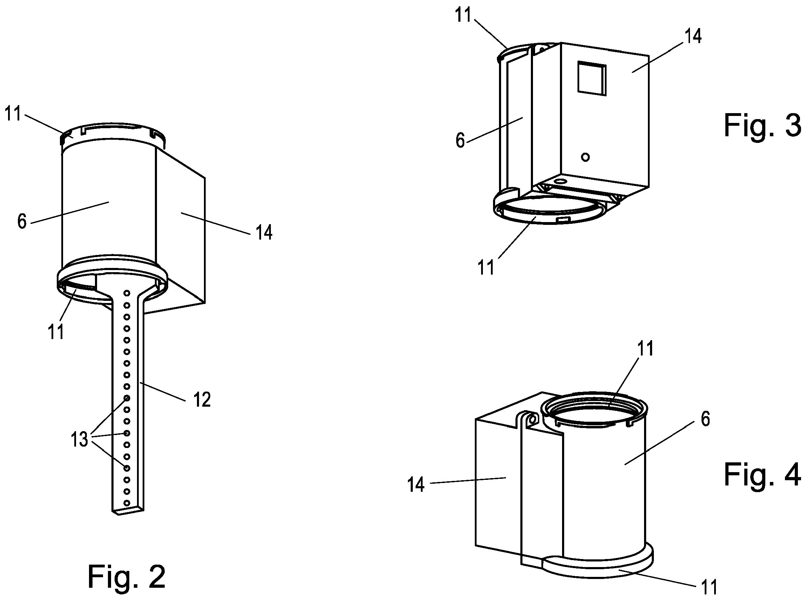

Die Einrichtung 7 zum Erfassen der Menge gefangener Insekten ist ein Adapter 6, von dem ein Messstab 12 nach unten weist. An dem Messstab 12 sind nebeneinander liegend mehrere Sensoren 13 vorgesehen (Fig. 2). Die Sensoren 13 sprechen an, wenn sie vollständig von Insekten bedeckt sind. Beispielsweise sind die Sensoren 13 lichtempfindliche Widerstände (LDR). In zusammengebautem Zustand (vgl. Fig. 1) ragt der Messstab 12 mit den Sensoren 13 von oben her in den Fangbehälter 8. An dem Adapter 6 ist ein Gehäuse 14 angebaut. In dem Gehäuse 14 können eine Batterie und die Elektronik untergebracht sein.

In dem Gehäuse 14 können eine Elektronik zum Ermitteln der Menge (Zahl) gefangener Insekten, eine Einrichtung zum Übermitteln von Daten betreffend gefangene Insekten, ein Modul Wireless-Powershare, eine Stromquelle (Batterie, Akku oder Photovoltaik) und/oder eine Schaltung zum Laden der Stromquelle enthalten sein. An dem Gehäuse 14 kann ein Display zum Anzeigen von relevanten Daten (Menge an Insekten, Betriebszustand optisches Signal, dass der Fangbehälter "voll" ist und dgl.) vorgesehen sein.

Aufgrund der Höhe (Stärke) der Schicht aus gefangenen Insekten in dem Fangbehälter 8 kann aufgrund bekannter Abmessungen des Fangbehälters 8 die Menge, insbesondere die Zahl, gefangener Insekten ermittelt werden.

Da der mit dem Adapter 6 verbundene Fangbehälter 8 (Fangflasche) relativ zu dem Messstab 12 mit den Sensoren 13 in definierter Lage gehalten ist, einerseits, und die Querschnittsfläche des Fangbehälters 8 bekannt ist, anderseits, kann auf Grundlage der von den Sensoren 13 ermittelten Höhe der Schicht aus in dem Fangbehälter 8 gefangenen Insekten das Volumen der im Fangbehälter 8 angesammelten (gefangenen) Insekten berechnet werden.

Aus dem so ermittelten Volumen wird die Zahl der Insekten errechnet, indem das Volumen mit einem Quotienten multipliziert wird, wobei der Quotient der Zahl der Insekten je Volumseinheit entspricht. Beispielsweise ist der Quotient für Buchdrucker (etwa) 40 Buchdrucker/cm³ und für Kupferstecher (etwa) 600 Kupferstecher/cm³.

Beispielsweise wird dabei wie folgt vorgegangen:
Die Höhe "H" der Schicht gefangener Insekten wird von den Sensoren des Messstabes 12 erfasst. Der Abstand der Sensoren 13 von der Innenseite des Bodens des Fangbehälters 8 ist bekannt, weil der Fangbehälter 8 an dem Adapter 6 in definierter Lage gehalten und zentriert ist.

Die Querschnittfläche "F" des Innenraumes des Fangbehälters 8 ist bekannt.

Das Volumen "V" der Schicht aus in dem Fangbehälter 8 angesammelten Insekten ist: $V = F \times H$

Die Zahl "Z" der in dem Gefäß angesammelten Insekten wird durch Multiplizieren des Volumens "V" mit dem Quotienten

"Q" errechnet: $Z = V \times Q$

Der Quotient "Q" ist die Zahl von Insekten je Volumseinheit. Beispielsweise ist der Quotient für Buchdrucker 40/cm³.

Sobald sich in dem Fangbehälter 8 eine vorgegebene und vorwählbare Anzahl von Insekten angesammelt hat, kann dieser nach dem Abnehmen von dem Adapter 6 entleert, gegebenenfalls gereinigt und dann wieder eingesetzt werden.

Auf den Umstand, dass der Fangbehälter 8 zu leeren und gegebenenfalls zu reinigen ist, kann durch ein optisches und/oder akustisches Signal hingewiesen werden.

Um das Zurückklettern von Insekten aus dem Fangbehälter 8, durch den Adapter 6 sowie entlang des Messstabes 12 zu verhindern, sind die Flächen der genannten Bestandteile glatt ausgebildet, beispielsweise mit einer (sehr) glatten Teflon-Folie (Stärke beispielsweise 0,5 mm) verkleidet, oder bestehen zur Gänze aus glattem Kunststoff, wie Teflon.

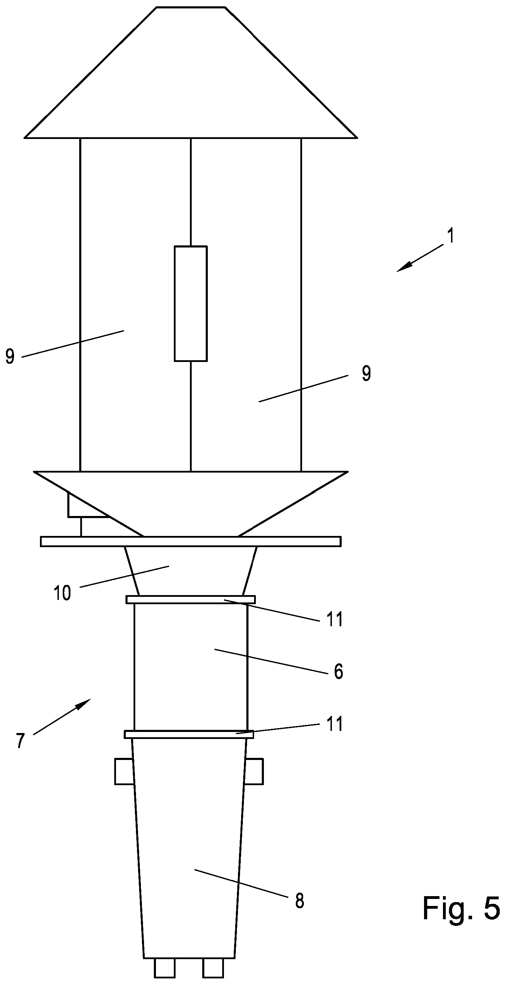

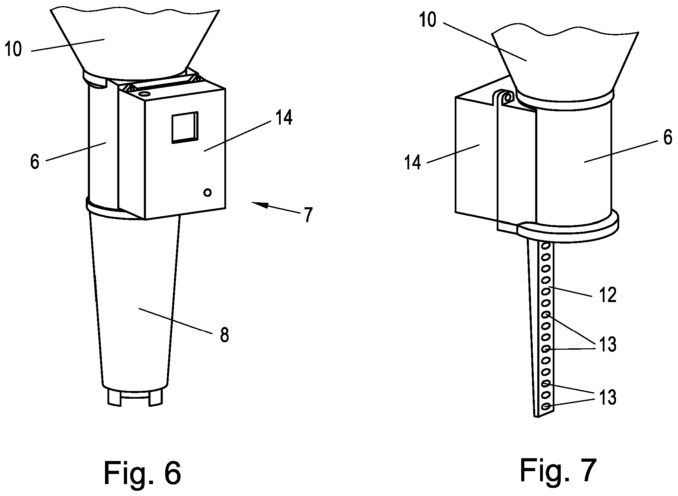

Eine in den Fig. 5 bis 7 gezeigte, als Kreuzbarrierenfalle ausgebildete, Insektenfalle 1 hat drei oder vier einander kreuzend angeordnete Platten 9, an deren unterem Ende ein Trichter 10 angeordnet ist, der sich von oben nach unten verjüngt. Am unteren Ende der Kreuzbarrierenfalle ist der Fangbehälter 8 an dem Trichter 10 über den Adapter 6 angesetzt. Zwischen dem Adapter 6 und dem Trichter 10 einerseits und zwischen dem Adapter 6 und dem Fangbehälter 8 anderseits sind bajonettverschlussartige Kupplungen 11 (oder Schnapp- oder Schraubverbindungen) vorgesehen. So kann der Adapter 6 an dem Trichter 10 lösbar befestigt werden. An der in Gebrauchslage unteren Seite weist der Adapter 6 ebenfalls eine bajonettverschlussartige Kupplung 11 auf, über die der Fangbehälter 8 (Fangflasche) an dem Adapter 6 lösbar befestigt werden kann.

Zusammenfassend kann ein Ausführungsbeispiel der Erfindung wie folgt beschrieben werden:
Eine Insektenfalle 1 mit einem Fangbehälter 8 weist eine Einrichtung 7 zum Erfassen der Zahl der in dem Fangbehälter 8 enthaltenen, gefangenen Insekten auf. Die Einrichtung 7 umfasst einen Adapter 6, der oberhalb der Öffnung des Fangbehälters 8 angeordnet ist. Von dem Adapter 6 steht ein als Messstab 12 ausgebildeter Träger für Sensoren 13 ab und ragt in den Fangbehälter 8. Die Sensoren 13, die beispielsweise LDR-Sensoren sind, sprechen auf vor ihnen befindliche Insekten in dem Fangbehälter 8 an. Auf Grundlage der von den Sensoren 13 erfassten Höhe der Schicht bzw. einzelner Schichten an in dem Fangbehälter 8 enthaltenen Insekten wird die Zahl der gefangenen Insekten ermittelt.

## Patentansprüche

1. Insektenfalle (1), mit einem Fangbehälter (8), in dem gefangene Insekten gesammelt werden, und mit einer Einrichtung (7) zum Erfassen der Menge, insbesondere der Zahl, im Fangbehälter (8) gesammelter Insekten, wobei die Einrichtung (7) wenigstens zwei Sensoren (13) umfasst, die in dem Fangbehälter (8) vorgesehen sind und die ansprechen, wenn sich Insekten im Bereich von Sensoren (13) befinden und wobei die Sensoren (13) an einem in den Fangbehälter (8) ragenden, einen Träger bildenden, Messstab (12) angeordnet sind, **dadurch gekennzeichnet, dass** die Sensoren (13) an dem Messstab (12) in dieselbe Richtung weisend angeordnet sind.

2. Insektenfalle nach Anspruch 1, **dadurch gekennzeichnet, dass** die Sensoren (13) übereinander in einer in Gebrauchslage der Insektenfalle (1) im Wesentlichen lotrechten Reihe angeordnet sind.

3. Insektenfalle nach Anspruch 1 oder 2, **dadurch gekennzeichnet, dass** der Messstab (12) von der offenen Seite her in den Fangbehälter ragt.

4. Insektenfalle nach Anspruch 3, **dadurch gekennzeichnet, dass** der Messstab (12) in Gebrauchslage von oben her in den Fangbehälter (8) ragt.

5. Insektenfalle nach einem der Ansprüche 1 bis 4, **dadurch gekennzeichnet, dass** der Messstab (12) mit den Sensoren (13) an einem die Einrichtung (7) bildenden Adapter (6) angeordnet ist und dass der Adapter (6) zwischen dem Körper der Insektenfalle (1) und dem Fangbehälter (8) angeordnet ist.

6. Insektenfalle nach Anspruch 5, **dadurch gekennzeichnet, dass** der Adapter (6) mit dem Körper der Insektenfalle (1) über eine lösbare Kupplung (11) verbunden ist.

7. Insektenfalle nach Anspruch 5 oder 6, **dadurch gekennzeichnet, dass** der Adapter (6) mit dem Fangbehälter (8) über eine lösbare Kupplung (11) verbunden ist.

8. Insektenfalle nach Anspruch 6 oder 7, **dadurch gekennzeichnet, dass** die Kupplung (11) nach Art eines Bajonettverschlusses oder als Schnapp- oder Schraubverbindung ausgebildet ist.

9. Insektenfalle nach einem der Ansprüche 1 bis 8, **dadurch gekennzeichnet, dass** die Sensoren (13) berührungslos ansprechende Sensoren sind.

10. Insektenfalle nach Anspruch 9, **dadurch gekennzeichnet, dass** die Sensoren (13) als lichtabhängige Widerstände, insbesondere als lichtabhängige Halbleiterwiderstände (LDR), oder als kapazitative Näherungssensoren ausgebildet sind.

11. Insektenfalle nach einem der Ansprüche 5 bis 10, **dadurch gekennzeichnet, dass** an dem Adapter (6) ein Gehäuse (14), in dem eine Stromquelle und/oder eine Elektronik und/oder ein Temperatursensor untergebracht ist/sind, angebaut ist.

12. Insektenfalle nach Anspruch 11, **dadurch gekennzeichnet, dass** der Fühler des Temperatursensors in einer Außenwand des Gehäuses des Adapters (6) angeordnet ist.

## Claims

1. Insect trap (1), comprising a collection container (8) in which captured insects are collected and a device (7) for detecting the quantity, in particular the number, of insects collected in the collection container (8), wherein the device (7) comprises at least two sensors (13) that are provided in the collection container (8) and which respond when insects are present in the vicinity of the sensors (13), and wherein the sensors (13) are arranged on a measuring rod (12) that extends into the collection container (8) and forms a support, **characterized in that** the sensors (13) are arranged on the measuring rod (12) facing in the same direction.

2. Insect trap according to claim 1, **characterized in that** the sensors (13) are arranged one above the other in a substantially vertical row in the operational position of the insect trap (1).

3. Insect trap according to claim 1 or 2, **characterized in that** the measuring rod (12) projects into the collection container from the open side.

4. Insect trap according to claim 3, **characterized in that**, in the operational position, the measuring rod (12) projects into the collection container (8) from above.

5. Insect trap according to one of claims 1 to 4, **characterized in that** the measuring rod (12) with the sensors (13) is arranged on an adapter (6) forming the device (7), and **in that** the adapter (6) is arranged between the body of the insect trap (1) and the collection container (8).

6. Insect trap according to claim 5, **characterized in that** the adapter (6) is connected to the body of the insect trap (1) via a detachable coupling (11).

7. Insect trap according to claim 5 or 6, **characterized in that** the adapter (6) is connected to the collection container (8) via a detachable coupling (11).

8. Insect trap according to claim 6 or 7, **characterized in that** the coupling (11) is designed as a bayonet lock or as a snap-fit or screw connection.

9. Insect trap according to one of claims 1 to 8, **characterized in that** the sensors (13) are non-contact sensors.

10. Insect trap according to claim 9, **characterized in that** the sensors (13) are designed as light-dependent resistors, in particular as light-dependent semiconductor resistors (LDRs), or as capacitive proximity sensors.

11. Insect trap according to one of claims 5 to 10, **characterized in that** a housing (14), in which a power source and/or electronics and/or a temperature sensor is/are housed, is attached to the adapter (6).

12. Insect trap according to claim 11, **characterized in that** the probe of the temperature sensor is arranged in an outer wall of the housing of the adapter (6).

## Revendications

1. Piège à insectes (1), comprenant un récipient de capture (8) dans lequel des insectes capturés sont collectés et comprenant un dispositif (7) pour enregistrer la quantité, en particulier le nombre, d'insectes collectés dans le récipient de capture (8), dans lequel le dispositif (7) comprend au moins deux capteurs (13) qui sont prévus dans le récipient de capture (8) et qui fonctionnent lorsque des insectes se trouvent dans la région de capteurs (13) et dans lequel les capteurs (13) sont disposés sur une tige de mesure (12) qui fait saillie dans le récipient de capture (8) et qui forme un support, **caractérisé en ce que** les capteurs (13) sont disposés sur la tige de mesure (12) en pointant dans la même direction.

2. Piège à insectes selon la revendication 1, **caractérisé en ce que** les capteurs (13) sont disposés l'un au-dessus de l'autre dans une rangée sensiblement verticale en position d'utilisation du piège à insectes (1).

3. Piège à insectes selon la revendication 1 ou 2, **caractérisé en ce que** la tige de mesure (12) fait saillie dans le récipient de capture à partir du côté ouvert.

4. Piège à insectes selon la revendication 3, **caractérisé en ce que** la tige de mesure (12) en position d'utilisation fait saillie dans le récipient de capture (8) à partir du haut.

5. Piège à insectes selon l'une des revendications 1 à 4, **caractérisé en ce que** la tige de mesure (12) avec les capteurs (13) est disposée sur un adaptateur (6) formant le dispositif (7) et **en ce que** l'adaptateur (6) est disposé entre le corps du piège à insectes (1) et le récipient de capture (8).

6. Piège à insectes selon la revendication 5, **caractérisé en ce que** l'adaptateur (6) est relié au corps du piège à insectes (1) par le biais d'un raccord détachable (11).

7. Piège à insectes selon la revendication 5 ou 6, **caractérisé en ce que** l'adaptateur (6) est relié au récipient de capture (8) par le biais d'un raccord détachable (11).

8. Piège à insectes selon la revendication 6 ou 7, **caractérisé en ce que** le raccord (11) est conçu à la manière d'une fermeture à baïonnette ou d'une liaison vissée ou par encliquetage.

9. Piège à insectes selon l'une des revendications 1 à 8, **caractérisé en ce que** les capteurs (13) sont des capteurs à fonctionnement sans contact.

10. Piège à insectes selon la revendication 9, **caractérisé en ce que** les capteurs (13) sont conçus sous la forme de résistances dépendantes de la lumière, en particulier sous la forme de résistances semi-conductrices dépendantes de la lumière (LDR) ou sous la forme de capteurs de proximité capacitifs.

11. Piège à insectes selon l'une des revendications 5 à 10, **caractérisé en ce que** sur l'adaptateur (6) est monté un boîtier (14) dans lequel est/sont logé/s une source d'alimentation et/ou des composants électroniques et/ou un capteur de température.

12. Piège à insectes selon la revendication 11, **caractérisé en ce que** la sonde du capteur de température est disposée dans une paroi extérieure du boîtier de l'adaptateur (6).
